# EUROPÄISCHE PATENTANMELDUNG

(11) **EP 4 840 278 A1**
(43) Veröffentlichungstag der Anmeldung: **18.11.2026**
(21) Anmeldenummer: 26176286.8
(22) Anmeldetag: 04.05.2026
(51) Int. Cl.: A01B 69/04, G05D 107/20

(54) **VERFAHREN ZUM STEUERN EINES GESPANNS**

(30) Priorität: 16.05.2025 DE 102025119037
(71) Anmelder: KRONE Agriculture SE, 48480 Spelle (DE); Lemken GmbH & Co KG, 46519 Alpen (DE)
(72) Erfinder: Herbers, Jens, 48480 Schapen (DE); Menke, Stefan, 46354 Südlohn (DE)
(74) Vertreter: Busse & Busse

(57) **Zusammenfassung**

Die Erfindung betrifft ein Verfahren zum Steuern eines Gespanns (2) mit einem Schlepper (40), welcher einen Schlepper-Fahrantrieb (42) und ein lenkbares Schlepper-Fahrwerk (43) aufweist, und mit einer an den Schlepper (40) angehängten Landmaschine (10), welche zur autonomen Feldbearbeitung eingerichtet ist und einen Maschinen-Fahrantrieb (12) sowie ein lenkbares Maschinen-Fahrwerk (13) aufweist und an welche ein Bearbeitungsgerät (30) ankoppelbar ist, so dass die Landmaschine (10) und das Bearbeitungsgerät (30) Teileinheiten (4, 5) einer Bearbeitungseinheit (3) bilden. Um die Handhabung einer an einen Schlepper (40) angekoppelten autonomen Landmaschine (10) zu vereinfachen, ist erfindungsgemäß vorgesehen, dass das Gespann (2) in einem Rangiermodus gesteuert wird, indem eine Steuereinheit (6)
- Sensordaten (D) empfängt (S160, S350), die wenigstens anteilig von einer der Teileinheiten (4, 5) erzeugt werden;
- basierend auf den Sensordaten (D) sowie einer Fahrtrichtungsvorgabe (V) für die Landmaschine (10), Lenkparameter (P_{L}) zum Lenken der Landmaschine (10) sowie des Schleppers (40) ermittelt (S170, S360); und
- wenigstens die Landmaschine (10) automatisch entsprechend den Lenkparametern (P_{L}) lenkt (S180, S370).

## Beschreibung

Die vorliegende Erfindung betrifft ein Verfahren nach dem Oberbegriff von Anspruch 1, ein landwirtschaftliches System nach dem Oberbegriff von Anspruch 16 sowie eine Steuereinheit nach dem Oberbegriff von Anspruch 17.

Im Stand der Technik sind seit Langem zum einen selbstfahrende Landmaschinen bekannt, die durch einen Fahrer gesteuert werden, sowie Landmaschinen ohne eigenen Fahrantrieb, die beispielsweise bei der Feldbearbeitung von einem Schlepper gezogen werden. Zusätzlich wurden in den letzten Jahren autonome Landmaschinen entwickelt, die eine Feldbearbeitung selbstständig durchführen können, ohne von einem Fahrer oder Bediener gesteuert zu werden. Eine solche autonome Landmaschine kann dazu eingerichtet sein, je nach Anforderung mit einem Bearbeitungsgerät kombiniert zu werden, das an die Landmaschine angekoppelt wird. Während die Landmaschine die Feldbearbeitung autonom durchführen kann, ist eine autonome Überführungsfahrt über öffentliche Straßen derzeit weder zulässig noch technisch vorgesehen. Die Landmaschine kann daher zum Transport entweder auf einen Tieflader geladen werden, oder sie kann an einen Schlepper angehängt werden, der sie während der Überführungsfahrt zieht.

Allerdings kann die Handhabung des Gespanns aus Schlepper und Landmaschine für einen Fahrer anspruchsvoll sein. Dies betrifft insbesondere Situationen, in denen das Gespann rückwärts fährt, also der Schlepper die Landmaschine rückwärts schiebt. Neben den Herausforderungen, die eine Rückwärtsfahrt mit einem herkömmlichen Anhänger mit sich bringt, können sich weitere Probleme ergeben. So kann die Landmaschine zwei lenkbare Achsen aufweisen, die zwangsgekoppelt sein können. Das sich hieraus ergebende Lenkverhalten ist für den Fahrer des Schleppers sehr schwer einzuschätzen. In jedem Fall ist eine Rückwärtsfahrt anspruchsvoll und wird auch dadurch erschwert, dass die Landmaschine dem Fahrer des Schleppers teilweise die Sicht versperrt. Daher ist es kaum möglich, ein Bearbeitungsgerät an die Landmaschine anzukoppeln, während diese an den Schlepper angehängt ist. Das Ankoppeln wird stattdessen durchgeführt, nachdem die Landmaschine vom Schlepper abgehängt wurde oder bevor sie an diesen angehängt wird. Ein Bediener muss die Landmaschine z.B. mittels einer Fernbedienung an das Bearbeitungsgerät heranführen und kann dann den eigentlichen Ankopplungsvorgang auslösen oder teilweise händisch durchführen. Dies ist für den Bediener umständlich und u.U. auch gefährlich, da er sich für einen optimalen Blick auf den Ankopplungsbereich in unmittelbarer Nähe aufhalten muss.

Aufgabe der Erfindung ist es, die Handhabung einer an einen Schlepper angekoppelten autonomen Landmaschine zu vereinfachen.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren geschaffen zum Steuern eines Gespanns mit einem Schlepper, welcher einen Schlepper-Fahrantrieb und ein lenkbares Schlepper-Fahrwerk aufweist, und mit einer an den Schlepper angehängten Landmaschine, welche zur autonomen Feldbearbeitung eingerichtet ist und einen Maschinen-Fahrantrieb sowie ein lenkbares Maschinen-Fahrwerk aufweist und an welche ein Bearbeitungsgerät ankoppelbar ist, so dass die Landmaschine und das Bearbeitungsgerät Teileinheiten einer Bearbeitungseinheit bilden.

Das Gespann weist wenigstens zwei Fahrzeuge auf, nämlich den Schlepper und die Landmaschine. Der Schlepper kann auch als Traktor oder Zugmaschine bezeichnet werden. Er kann für spezifisch landwirtschaftliche Anwendungen vorgesehen sein, es könnte sich aber auch um ein Kraftfahrzeug wie bspw. einen Lkw handeln. In jedem Fall weist der Schlepper einen eigenen Fahrantrieb auf, der in diesem Zusammenhang als Schlepper-Fahrantrieb bezeichnet wird. Der Schlepper-Fahrantrieb weist wenigstens einen Motor auf, der bspw. als Verbrennungsmotor oder Elektromotor ausgebildet sein kann, sowie optional ein Getriebe zur Kraftübertragung. Weiterhin weist der Schlepper ein lenkbares Schlepper-Fahrwerk auf. Das Fahrwerk dient zur Übertragung einer durch den Schlepper-Fahrantrieb erzeugten Antriebskraft auf den Untergrund, d.h. es ist zumindest kraftübertragend an den Schlepper-Fahrantrieb koppelbar. Das Schlepper-Fahrwerk könnte als Raupenfahrwerk ausgebildet sein, bevorzugt ist es allerdings als Radfahrwerk mit einer Mehrzahl von Rädern ausgebildet. Die Räder sind einer Mehrzahl von Achsen zugeordnet, von denen wenigstens eine antreibbar ist. Ebenso ist wenigstens eine Achse lenkbar. In diesem Zusammenhang wird auch ein Raupenfahrwerk als lenkbar angesehen, da dieses durch unterschiedliche Antriebsgeschwindigkeiten der beiderseits angeordneten Raupenlaufwerke eine gezielte Richtungsänderung ermöglicht. Wenngleich dies zur Realisierung der Erfindung nicht zwingend nötig ist, weist der Schlepper bevorzugt einen Bedienerstand oder eine Fahrerkabine auf, von welcher aus der Schlepper gesteuert werden kann.

Die Landmaschine kann auch als landwirtschaftliche Arbeitsmaschine bezeichnet werden. Sie ist zur Feldbearbeitung vorgesehen, bspw. zum Pflügen, Düngen, Mähen, Zetten, zur Erntegutaufnahme oder dergleichen. Allerdings ist sie nicht für eine spezifische Art von Feldbearbeitung eingerichtet, sondern kann durch Kombination mit einem geeigneten Bearbeitungsgerät für unterschiedliche Arten von Feldbearbeitung genutzt werden. Genauer gesagt, ist die Landmaschine zur autonomen Feldbearbeitung eingerichtet. D.h., sie kann eine Feldbearbeitung ohne Steuerkommandos eines Fahrers oder Bedieners durchführen. Es wäre allerdings auch denkbar, dass die Landmaschine einen Führungsstand oder eine Fahrerkabine aufweist und zumindest bedarfsweise von einem Fahrer gesteuert werden kann. Auch die Landmaschine weist einen eigenen Fahrantrieb auf, der in diesem Zusammenhang als Maschinen-Fahrantrieb bezeichnet wird. Auch dieser weist wenigstens einen Motor auf sowie optional ein Getriebe zur Kraftübertragung. Weiterhin weist die Landmaschine ein lenkbares Maschinen-Fahrwerk auf. Dieses ist zumindest kraftübertragend an den Schlepper-Fahrantrieb koppelbar. Bevorzugt ist es als Radfahrwerk ausgebildet, mit einer Mehrzahl von Achsen, von denen wenigstens eine antreibbar ist und wenigstens eine lenkbar ist. Insbesondere kann das Maschinen-Fahrwerk zwei lenkbare Achsen aufweisen. Dabei ist es möglich, dass die Lenkbarkeit der Achsen in unterschiedlichen Betriebsmodi der Landmaschine unterschiedlich ausgebildet ist. Z.B. könnten bei der autonomen Feldbearbeitung beide Achsen unabhängig voneinander lenkbar sein, während in einem Transportmodus, in welchem die Landmaschine an den Schlepper angehängt ist, die Hinterachse arretiert oder durch die Vorderachse zwangsgelenkt sein könnte.

Innerhalb des Gespanns ist die Landmaschine an den Schlepper angehängt. Dies bedeutet, dass die Landmaschine auf ihrem eigenen Fahrwerk aufsteht, allerdings derart mit dem Schlepper verbunden ist, dass dieser zumindest eine Zugkraft sowie bevorzugt auch eine Druckkraft auf die Landmaschine ausüben kann. Das Gespann kann insbesondere dazu dienen, die Landmaschine, welche u.U. für eine eigenständige Straßenfahrt nicht zugelassen ist, über öffentliche Verkehrswege von einem Ort zu einem anderen zu überführen. Es könnte sich hierbei um eine Fahrt von einem landwirtschaftlichen Betrieb zu einem Bearbeitungsbereich der Landmaschine handeln oder um eine Fahrt zwischen zwei räumlich getrennten Bearbeitungsbereichen. Die Landmaschine kann über eine Deichsel mit dem Schlepper verbunden sein, wobei als Deichsel in diesem Zusammenhang jede in sich starre Vorrichtung bezeichnet wird, die zur Zug- und Druckkraftübertragung eingerichtet ist. Eine solche Deichsel kann Teil der Landmaschine sein. Sie ist typischerweise mit wenigstens einem Freiheitsgrad gegenüber einem Fahrzeugkörper des Schleppers sowie gegenüber einem Fahrzeugkörper der Landmaschine beweglich. In einigen Ausführungsformen kann sie allerdings mechanisch mit der Vorderachse der Landmaschine verbunden sein, wodurch eine Zwangslenkung der Vorderachse über die Deichsel möglich ist. In anderen Ausführungsformen könnte die Deichsel allerdings auch von den Achsen der Landmaschine entkoppelt und gegenüber dem Fahrzeugkörper der Landmaschine frei beweglich sein.

Zusätzlich zu der kraftübertragenden Verbindung zwischen Schlepper und Landmaschine kann eine signalübertragende Verbindung gegeben sein, die auch als Datenverbindung bezeichnet werden kann. Diese kann drahtlos oder drahtgebunden ausgebildet sein. Beispielsweise kann eine Verbindung gemäß dem ISOBUS-Standard gegeben sein. Die Verbindung kann zur Übertragung von Daten und/oder Befehlen genutzt werden. Auch eine energieübertragende Verbindung ist möglich, z.B. eine elektrische, hydraulische oder pneumatische Verbindung, wodurch Systeme der Landmaschine seitens des Schleppers mit Energie versorgt werden können.

Wie bereits erwähnt, kann die Landmaschine mit einem Bearbeitungsgerät kombiniert werden. Das Bearbeitungsgerät ist an die Landmaschine ankoppelbar. D.h. es kann je nach Bedarf direkt oder indirekt an den Fahrzeugkörper der Landmaschine gekoppelt werden, wobei der Fahrzeugkörper selbst für keine spezifische Art der Feldbearbeitung eingerichtet ist. Das Bearbeitungsgerät kann für unterschiedliche Arten der Feldbearbeitung ausgelegt sein und kann z.B. als Mähwerk, Schwader, Zetter, Pflug, Grubber oder dergleichen ausgebildet sein. Es kann z.B. als Anbaugerät ausgebildet und mit einem Hubwerk der Landmaschine verbindbar sein, welches am Fahrzeugkörper angeordnet ist. Alternativ kann das Bearbeitungsgerät aber auch als gezogenes Bearbeitungsgerät an die Landmaschine anhängbar sein, z.B. über eine Anhängerkupplung. Neben einer mechanischen Verbindung ist auch eine energieübertragende Verbindung möglich, z.B. eine elektrische, hydraulische oder pneumatische Verbindung. Auch kann eine drahtlose oder drahtgebundene Datenverbindung zwischen dem Fahrzeugkörper und dem Bearbeitungsgerät herstellbar sein. Die Landmaschine und das Bearbeitungsgerät bilden zwei Teileinheiten einer Bearbeitungseinheit, welche auch als Bearbeitungskombination oder Bearbeitungssystem bezeichnet werden kann. In diesem Zusammenhang werden die Teileinheiten auch dann zusammen als Bearbeitungseinheit bezeichnet, wenn sie nicht aneinander gekoppelt sind. Wie nachfolgend noch erläutert wird, kann das Bearbeitungsgerät während des Verfahrens wenigstens zeitweise an die Landmaschine angekoppelt sein und somit einen Teil des Gespanns bilden.

Erfindungsgemäß ist vorgesehen, dass das Gespann in einem Rangiermodus gesteuert wird, und zwar indem eine Steuereinheit wenigstens die nachfolgend genannten drei Schritte ausführt. Die Steuereinheit kann durch eine einzige Komponente gebildet sein, sie kann allerdings auch eine Mehrzahl von Komponenten aufweisen, die räumlich getrennt voneinander angeordnet sein können. Die Steuereinheit kann wenigstens einen Prozessor aufweisen sowie wenigstens einen Datenspeicher, der wenigstens anteilig flüchtig oder nicht-flüchtig ausgebildet sein kann. Zumindest einige Aspekte der Steuereinheit können softwaremäßig implementiert sein. Wie nachfolgend noch erläutert wird, kann die Steuereinheit bevorzugt Teil des Gespanns sein, es könnte sich allerdings auch um eine externe Steuereinheit handeln, die bspw. in einem mobilen Gerät wie einem Tablet oder Smartphone angeordnet ist. Die Verfahrensschritte können in der Reihenfolge ihrer Nennung ausgeführt werden, sie können aber auch in anderer Reihenfolge und/oder wenigstens teilweise gleichzeitig ausgeführt werden, sofern dies technisch sinnvoll ist. Insbesondere kann jeder der genannten Verfahrensschritte mehrfach ausgeführt werden.

Gemäß einem Verfahrensschritt empfängt die Steuereinheit Sensordaten, die wenigstens anteilig von einer der Teileinheiten erzeugt werden. Genauer gesagt, werden die Sensordaten wenigstens anteilig von einer Sensoranordnung, d.h. wenigstens einem Sensor, einer der Teileinheiten erzeugt. Insbesondere kann die Sensoranordnung wenigstens einen Umgebungssensor der entsprechenden Teileinheit aufweisen, also einen Sensor, der nicht die Teileinheit selbst oder ihren Zustand überwacht, sondern die Umgebung der Teileinheit. D.h. die Sensordaten können wenigstens anteilig von wenigstens einem Umgebungssensor einer der Teileinheit erzeugt werden. Ausdrücklich ist die Möglichkeit gegeben, dass die Sensordaten von beiden Teileinheiten erzeugt werden und/oder dass die Sensordaten auch teilweise vom Schlepper erzeugt werden. Die Sensordaten können insbesondere in digitaler Form erzeugt und empfangen werden. Der Begriff "Sensordaten" schließt in diesem Zusammenhang allerdings auch analoge Signale ein, die von einem oder mehreren Sensoren erzeugt und von der Steuereinheit empfangen werden können.

Gemäß einem weiteren Schritt ermittelt die Steuereinheit basierend auf den Sensordaten sowie einer Fahrtrichtungsvorgabe für die Landmaschine, Lenkparameter zum Lenken der Landmaschine sowie des Schleppers. Hier und im Folgenden bedeutet die Formulierung "A basiert auf B", dass A von B abhängt, wobei es zusätzlich von weiteren Größen abhängen kann. D.h., die Steuereinheit bezieht zum einen die Sensordaten sowie zum anderen die Fahrtrichtungsvorgabe für die Landmaschine ein, um die genannten Lenkparameter zu ermitteln. Die Fahrtrichtungsvorgabe kann mehr oder weniger präzise sein. Bspw. könnte sie qualitativ beschreiben, dass die Landmaschine weiter nach links oder weiter nach rechts fahren soll. Sie könnte auch qualitativ beschreiben, dass die Landmaschine in einem bestimmten einer bestimmten Richtung relativ zur Umgebung ausgerichtet werden soll oder in einer bestimmten Richtung relativ zum Schlepper. Auch könnte die Fahrtrichtungsvorgabe eine Angabe beinhalten, dass die Landmaschine sich in Richtung auf eine bestimmte Position bewegen soll. Wie nachfolgend noch erläutert wird, kann die Fahrtrichtungsvorgabe der Steuereinheit extern vorgegeben werden oder sie kann von der Steuereinheit selbst festgelegt werden. Die Sensoreinheit bestimmt Lenkparameter zum Lenken des Schleppers sowie der Landmaschine, wobei die Bestimmung sowohl auf den empfangenen Sensordaten als auch auf der Fahrtrichtungsvorgabe basiert. Die Lenkparameter beschreiben, wie das Schlepper-Fahrwerk sowie das Maschinen-Fahrwerk zu lenken sind. Derartige Lenkparameter können insbesondere einen Lenkwinkel einer lenkbaren Achse beschreiben. D.h., obwohl sich die Fahrtrichtungsvorgabe auf die Landmaschine bezieht, werden nicht nur Lenkparameter für die Landmaschine selbst, sondern auch für den Schlepper bestimmt.

In einem weiteren Schritt lenkt die Steuereinheit wenigstens die Landmaschine automatisch entsprechend den Lenkparametern. D.h., die Steuereinheit steuert das Maschinen-Fahrwerk derart an, dass eine Lenkung der Landmaschine entsprechend den Lenkparametern resultiert. Dies bezieht sich selbstverständlich nur auf die Lenkparameter, die für die Landmaschine gelten. Die Steuereinheit muss das Maschinen-Fahrwerk nicht direkt ansteuern, es ist auch eine indirekte Ansteuerung möglich. So könnte die Steuereinheit Anweisungen an eine zwischengeordnete Einheit übertragen, woraufhin die zwischengeordnete Einheit wiederum das Maschinen-Fahrwerk ansteuert.

Das erfindungsgemäße Verfahren bringt verschiedene Vorteile und Vereinfachungen mit sich. Dadurch, dass Sensordaten wenigstens einer Teileinheit, also der Landmaschine und/oder des Bearbeitungsgeräts, genutzt werden, kann der Nachteil kompensiert werden, dass ein Fahrer des Schleppers einen nur eingeschränkten Sichtbereich hat. Dies bezieht sich insbesondere auf dem vom Fahrer abgewandten Bereich der Landmaschine, der bei einer Rückwärtsfahrt in Fahrtrichtung liegt.

Außerdem ist in diesem Bereich das Bearbeitungsgerät angekoppelt oder es wird in diesem Bereich angekoppelt. Durch die Sensordaten von wenigstens einer Teileinheit kann insbesondere dieser Bereich überwacht werden. Des Weiteren wird der Fahrer oder Bediener zumindest teilweise von der Steuerung des Gespanns entlastet. So werden die Lenkparameter sowohl für die Landmaschine als auch für den Schlepper von der Steuereinheit ermittelt, wobei die Landmaschine automatisch entsprechend der Lenkparameter gelenkt wird. D.h. der Bediener muss sich nicht mit der Lenkung der Landmaschine beschäftigen. Die Lenkparameter für den Schlepper werden von der Steuereinheit bereitgestellt, was eine Erleichterung bedeutet, unabhängig davon, ob die eigentliche Lenkung des Schleppers automatisch oder manuell erfolgt.

Bevorzugt wird die Landmaschine im Rangiermodus von einer Anfangsposition zu einer Endposition gesteuert, wobei die Steuereinheit eine zur Endposition führende Maschinen-Fahrroute ermittelt und die Fahrtrichtungsvorgabe dementsprechend definiert. D.h., die Steuereinheit kann von einer definierten Anfangsposition und einer definierten Endposition der Landmaschine ausgehen und eine hierzu passende Fahrroute ermitteln, die hier als Maschinen-Fahrroute bezeichnet wird. Die Anfangsposition kann insbesondere die Position der Landmaschine beim Eintritt in den Rangiermodus sein, es könnte aber auch eine zwischenzeitlich eingenommene Position sein. Die Endposition kann die letzte Position sein, bevor der Rangiermodus beendet wird, aber auch dies kann eine zwischenzeitlich eingenommene Position sein. Sowohl die Anfangsposition als auch die Endposition können nicht nur über translatorische Koordinaten, wie Länge, Breite und Höhe, definiert sein, sondern auch über rotatorische Koordinaten, wie Gier-, Nick- und Wankwinkel. D.h. jede der Positionen könnte neun Koordinaten enthalten. In der Praxis kann eine Beschreibung durch zwei translatorische Koordinaten (Länge und Breite) und eine rotatorische Koordinate (Gierwinkel bzw. Orientierung) ausreichend sein. Die Steuereinheit ermittelt die Maschinen-Fahrroute als eine Route oder Trajektorie, die die Landmaschine von der Anfangsposition in die Endposition überführt. Die Fahrtrichtungsvorgabe entspricht dann der jeweils vorgesehenen Fahrtrichtung entlang der Maschinen-Fahrroute. D.h., die Fahrtrichtungsvorgabe kann sich entlang der Maschinen-Fahrroute ändern. Bevorzugt ermittelt die Steuereinheit zusätzlich zur Maschine-Fahrroute eine mit der Maschinen-Fahrroute vereinbare Schlepper-Fahrroute. Dies ist eine Fahrroute des Schleppers. Da der Schlepper mit der Landmaschine verbunden ist, kann seine Fahrroute nicht beliebig gewählt werden, sondern sie muss mit der Maschinen-Fahrroute vereinbar sein. Es kann vorteilhaft sein, wenn die Schlepper-Fahrroute schon geplant wird, wenn die Landmaschine noch in der Anfangsposition ist. Hierdurch können z.B. mögliche Kollisionen frühzeitig vorausgesehen und/oder vermieden werden.

Die Steuerung des Gespanns zur Anfangsposition der Landmaschine kann in unterschiedlicher Weise durchgeführt werden. Es kann eine manuelle Steuerung durchgeführt werden, wobei ein Fahrer den Schlepper in herkömmlicher Weise manuell steuert und die Landmaschine durch Ziehen oder ggf. Schieben mitbewegt wird. Das Gespann wird dann nach Erreichen der Anfangsposition in den Rangiermodus versetzt. Eine andere Möglichkeit besteht darin, dass die Anfangsposition wenigstens teilweise automatisch angesteuert wird. Die Anfangsposition könnte z.B. anhand von GNSS-Koordinaten aufgefunden werden. Optional könnte ein solches automatisches Ansteuern bereits im Rangiermodus erfolgen oder zumindest in einem Modus, in welchem die Steuerung wenigstens teilweise durch die Steuereinheit erfolgt.

Bevorzugt ist die Steuereinheit in der Landmaschine angeordnet. Es kann sich um die gleiche Steuereinheit handeln, die die Landmaschine bei der autonomen Feldbearbeitung steuert. Die Steuereinheit kann drahtlos oder drahtgebunden mit weiteren Komponenten der Landmaschine verbunden sein. Auch kann eine Verbindung zum Schlepper, zum Bearbeitungsgerät oder zu einer externen Einheit gegeben oder zumindest herstellbar sein. Durch die Anordnung in der Landmaschine kann die Steuereinheit in optimaler Weise die automatische Lenkung der Landmaschine durchführen. Allerdings ist auch eine automatische Lenkung des Schleppers möglich, z.B. wenn die Landmaschine über eine ISOBUS-Schnittstelle mit dem Schlepper verbunden ist und über TIM (tractor implement management) diesen mitsteuern kann. Auch ist es bevorzugt, dass die Sensordaten wenigstens anteilig von einer Umgebungssensor-Anordnung der Landmaschine erzeugt werden, welche eine Umgebung der Landmaschine erfasst. Die Umgebungssensor-Anordnung weist wenigstens einen Umgebungssensor auf. Aufgrund ihrer Eignung für die autonome Feldbearbeitung verfügt die Landmaschine über wenigstens einen, normalerweise mehrere Umgebungssensoren, z.B. Abstandssensoren wie Radar-, Lidar- oder Ultraschallsensoren oder optische Sensoren wie Kameras. Diese ohnehin vorhandenen Sensoren können beim erfindungsgemäßen Verfahren vorteilhaft genutzt werden. Sofern auch die Steuereinheit in der Landmaschine angeordnet ist, kann diese optimal auf die Sensordaten zugreifen. Mithilfe der Sensoren der Landmaschine können der Schlepper, das Bearbeitungsgerät, oder Strukturen sowie Objekte in der Umgebung erfasst werden. All diese Informationen können zur Ermittlung der Lenkparameter sowie ggf. zur Ermittlung der o.g. Fahrrouten genutzt werden. Die Sensordaten können auch bei dieser Ausführungsform teilweise und ergänzend vom Schlepper und/oder vom Bearbeitungsgerät erzeugt werden.

Erfindungsgemäß wird die Landmaschine automatisch gelenkt. Zur Lenkung des Schleppers sind hingegen unterschiedliche Möglichkeiten gegeben. Zum einen kann der Schlepper automatisch entsprechend den Lenkparametern gelenkt werden. Man kann auch sagen, dass die Steuereinheit den Schlepper automatisch lenkt, wobei die Lenkung hierbei indirekt erfolgen kann, indem die Steuereinheit Anweisungen an eine zwischengeordnete Einheit überträgt, woraufhin die zwischengeordnete Einheit wiederum das Schlepper-Fahrwerk ansteuert. Dies ist insbesondere dann möglich, wenn die Steuereinheit in der Landmaschine angeordnet ist und über TIM den Schlepper ansteuert. Alternativ können den Lenkparametern entsprechende Lenkanweisungen über eine Benutzerschnittstelle ausgegeben werden und ein Benutzer kann den Schlepper entsprechend den Lenkanweisungen manuell lenken. Die Lenkanweisungen können in optischer Form oder in akustischer Form ausgegeben werden. Sie sind so ausgestaltet, dass sie für einen Benutzer verständlich sind, was bei den Lenkparametern u.U. nicht gegeben sein muss. Die Benutzerschnittstelle kann insbesondere Teil des Schleppers sein. Auf diese Weise kann ein Fahrer des Schleppers die Lenkanweisungen wahrnehmen und den Schlepper in ansonsten gewohnter Weise lenken. Es versteht sich, dass die Steuereinheit die Ausgabe der Lenkanweisungen steuern oder auslösen kann.

Vorteilhaft wird das Gespann im Rangiermodus durch den Maschinen-Fahrantrieb oder durch den Schlepper-Fahrantrieb als aktiven Fahrantrieb angetrieben. D.h. einer der beiden Fahrantriebe stellt die Antriebskraft zur Verfügung, durch welche das Gespann angetrieben wird. Falls der Schlepper-Fahrantrieb der aktive Antrieb ist, schiebt oder zieht der Schlepper die Landmaschine. Falls der Maschinen-Fahrantrieb der aktive Antrieb ist, schiebt oder zieht die Landmaschine den Schlepper. Bevorzugt wird der jeweils andere Fahrantrieb für den Rangiermodus abgeschaltet. D.h. wenn der Schlepper-Fahrantrieb aktiv ist, wird bevorzugt der Maschinen-Fahrantrieb abgeschaltet und umgekehrt. Dasjenige Fahrwerk, welches des jeweils nicht-aktiven Fahrantrieb zugeordnet ist, wird bevorzugt vom Fahrantrieb entkoppelt, indem z.B. eine Kupplung gelöst wird. Der aktive Fahrantrieb kann zu dem Fahrzeug gehören, in welchem die Steuereinheit angeordnet ist, insbesondere in der Landmaschine. Er kann aber auch zu dem jeweils anderen Fahrzeug gehören. Z.B. könnte die Steuereinheit in der Landmaschine angeordnet sein und über eine geeignete Verbindung zum Schlepper (z.B. über ISOBUS) den Schlepper-Fahrantrieb ansteuern, oder der Schlepper-Fahrantrieb kann manuell gesteuert werden.

Zusätzlich zu den Lenkparametern kann die Steuereinheit Antriebsparameter für wenigstens einen Fahrantrieb ermitteln. Die Antriebsparameter können zum einen eine Richtungsangabe, also "vorwärts" oder "rückwärts" enthalten, zum anderen aber auch eine Geschwindigkeitsangabe, z.B. "1000 Umdrehungen pro Minute". Die Antriebsparameter können sich auch auf ein Getriebe beziehen, das eine Antriebskraft vom Motor zum Fahrwerk überträgt. Die Steuereinheit kann den aktiven Fahrantrieb entsprechend den Antriebsparametern steuern. Dies ist insbesondere dann bevorzugt, wenn die Steuereinheit in der Landmaschine angeordnet ist und der Maschinen-Fahrantrieb der aktive Fahrantrieb ist. Allerdings kann die Steuereinheit in der Landmaschine auch den Schlepper-Fahrantrieb steuern. Alternativ können den Antriebsparametern entsprechende Antriebsanweisungen über eine Benutzerschnittstelle ausgegeben werden und ein Benutzer kann den aktiven Fahrantrieb entsprechend den Antriebsanweisungen manuell steuern. Die Antriebsanweisungen können in optischer Form oder in akustischer Form ausgegeben werden. Sie sind so ausgestaltet, dass sie für einen Benutzer verständlich sind, was bei den Antriebsparametern u.U. nicht gegeben sein muss. Die Benutzerschnittstelle kann insbesondere Teil des Schleppers sein. Auf diese Weise kann ein Fahrer des Schleppers die Lenkanweisungen wahrnehmen und den Schlepper in ansonsten gewohnter Weise fahren. Es kann sich um die gleiche Benutzerschnittstelle handeln wie diejenige, über die die o.g. Lenkanweisungen ausgegeben werden. Es versteht sich, dass die Steuereinheit die Ausgabe der Antriebsanweisungen steuern oder auslösen kann.

Eine Ausführungsform sieht vor, dass über eine Benutzerschnittstelle Umgebungsinformationen für einen Benutzer ausgegeben werden, die auf den Sensordaten basieren. Die Benutzerschnittstelle kann insbesondere ein Bildschirm sein, auf welchem dem Benutzer z.B. ein Kamerabild oder eine grafische Darstellung angezeigt wird. Die Umgebungsinformationen können sich insbesondere auf einen Bereich beziehen, welchen der Benutzer vom Schlepper aus nicht oder nur schlecht einsehen kann. Hierbei kann es sich um einen Bereich auf einer vom Schlepper abgewandten Seite der Landmaschine handeln. Die Umgebungsinformationen können auch einem Außenbild des Schleppers entsprechen, welches von einer Kamera der Landmaschine aufgenommen wird. Es können auch Umgebungsinformationen angezeigt werden, die auf Sensordaten vom Bearbeitungsgerät basieren. Z.B. könnte eine Kamera oder ein Abstandssensor des Bearbeitungsgeräts die Landmaschine und/oder den Schlepper erfassen und die entsprechenden Informationen könnten dem Benutzer angezeigt werden. Neben diesen Beispielen sind noch viele weitere Möglichkeiten der Informationsanzeige gegeben. Insbesondere können auch verschiedene Umgebungsinformationen nebeneinander angezeigt werden, die von unterschiedlichen Sensoren erzeugt werden, z.B. nach Art eines geteilten Bildschirms. Durch die Anzeige der Umgebungsinformationen kann der Benutzer einen automatisch durchgeführten Prozess überwachen und z.B. bei Bedarf eingreifen. In jedem Fall trägt es zum Vertrauen des Benutzers bei, wenn er über die Umgebungsinformationen einen Einblick in die ablaufenden Prozesse hat. Zusätzlich können die Umgebungsinformationen den Benutzer bei Benutzereingaben unterstützen. Dies kann sich z.B. auf die Auswahl einer Endposition beziehen. Der Benutzer könnte sich anhand der Umgebungsinformationen einen Überblick über die Umgebung des Gespanns verschaffen und dann eine geeignete Endposition auswählen. Die Umgebungsinforationen müssen nicht in optischer Form ausgegeben werden. So könnten auch Warn- oder Hinweistöne sowie Sprachausgaben erzeugt werden, um den Benutzer zu informieren.

Gemäß einer Ausführungsform wird die Fahrtrichtungsvorgabe durch eine Benutzereingabe festgelegt, welche bevorzugt über eine Benutzerschnittstelle des Schleppers erfolgt. D.h. in diesem Fall ermittelt die Steuereinheit keine Maschinen-Fahrroute, aus der sich die Fahrtrichtungsvorgabe ergibt, sondern der Benutzer legt die Fahrtrichtungsvorgabe fest. Dabei kann er z.B. eine Ausrichtung der Landmaschine relativ zum Schlepper angeben oder eine Ausrichtung der Landmaschine gegenüber der Umgebung. Die Benutzereingabe kann händisch getätigt werden, z.B. über einen Knopf, Steuerhebel oder Touchscreen. Es wäre aber auch eine andere Eingabeform denkbar, z.B. durch Sprache oder Gesten. Wenngleich eine entsprechende Benutzereingabe auch ohne Umgebungsinformationen möglich ist, kann die Anzeige solcher Informationen den Benutzer wesentlich unterstützen. Z.B. kann er anhand von Umgebungsinformationen besser beurteilen, wie die Landmaschine aktuell ausgerichtet ist und/oder wie sie auszurichten ist.

Besonders vorteilhaft erkennt die Steuereinheit basierend auf den Sensordaten ein Hindernis. Dies schließt selbstverständlich die Möglichkeit ein, dass eine Mehrzahl von Hindernissen erkannt werden. Das Hindernis kann ein unbelebtes Objekt sein, z.B. eine Wand, ein Erntegutballen, ein anderes Fahrzeug oder dergleichen, aber auch ein Tier oder eine Person können ein Hindernis darstellen. Das Hindernis ist genauer gesagt ein Hindernis, welches eine Fahrroute des Gespanns blockiert oder zumindest blockieren könnte. Z.B. könnte die Steuereinheit erkennen, dass die Landmaschine auf der festgelegten Maschinen-Fahrroute oder der Schlepper auf der vorgesehenen Schlepper-Fahrroute mit dem Hindernis kollidieren würde oder zumindest kollidieren könnte. Bei Erkennen des Hindernisses kann die Steuereinheit die Lenkparameter anpassen, um eine Kollision zwischen dem Hindernis und dem Gespann zu vermeiden. Eine Anpassung der Lenkparameter kann mit einer Anpassung der Maschinen-Fahrroute und/oder der Schlepper-Fahrroute einhergehen. Auch kann die Steuereinheit den aktiven Fahrantrieb abschalten und eine aktive Bremsung des Gespanns auslösen, um eine Kollision zu vermeiden. Alternativ oder zusätzlich kann die Steuereinheit eine Kollisionswarnung für einen Benutzer auslösen. Die Kollisionswarnung kann akustisch erfolgen. Es ist auch eine optische Warnung möglich, wobei eine Warnleuchte aktiviert werden kann oder auf einem Bildschirm ein Warnsymbol oder eine Warnmeldung ausgegeben wird. Auch kann auf dem Bildschirm das Hindernis markiert werden.

Gemäß einer Ausführungsform ist vorgesehen, dass die Steuereinheit die Endposition als Ankopplungsposition festlegt, in welcher das Bearbeitungsgerät an die Landmaschine ankoppelbar ist. D.h. die Steuereinheit bestimmt eine Position, in welcher ein Ankoppeln möglich ist. Wie bereits erwähnt, kann das Bearbeitungsgerät insbesondere als Anbaugerät an ein Hubwerk der Landmaschine ankoppelbar sein. Die Ankopplungsposition ist dabei bevorzugt so gewählt, dass das Bearbeitungsgerät zum Ankoppeln an die Landmaschine nicht mehr bewegt werden muss. Das Festlegen der Ankopplungsposition erfordert, dass die Steuereinheit Informationen über die Position des Bearbeitungsgeräts erhält. Diese Informationen können insbesondere durch die Sensordaten geliefert werden, wie nachfolgend noch erläutert wird. Bevorzugt steuert die Steuereinheit nach Erreichen der Endposition, also der Ankopplungsposition, ein Ankoppeln des Bearbeitungsgeräts an die Landmaschine. Hierzu kann die Steuereinheit z.B. ein Hubwerk der Landmaschine so bewegen, dass das Bearbeitungsgerät angekoppelt wird. Neben der mechanischen Verbindung kann das Ankoppeln auch z.B. eine signalübertragende Verbindung betreffen. Eine dafür notwendige Steckverbindung kann ebenfalls von der Steuereinheit gesteuert hergestellt werden. Durch ein autonom durchgeführtes Ankoppeln wird ein Bediener wesentlich entlastet. So kann der Fahrer des Schleppers während des Heranfahrens an die Ankopplungsposition sowie während des eigentlichen Ankoppelns des Bearbeitungsgeräts in der Fahrerkabine bleiben. Er kann je nach Ausführungsform den gesamten Vorgang nur überwachen oder er muss ggf. den Schlepper entsprechend vorgegebenen Lenkanweisungen und/oder Antriebsanweisungen bedienen. Ein Verlassen des Schleppers ist unnötig, was für den Fahrer komfortabel ist und auch verhindert, dass der Fahrer z.B. im Bereich zwischen Landmaschine und Bearbeitungsgerät einem Verletzungsrisiko ausgesetzt werden könnte.

Eine Ausführungsform sieht vor, dass in der Anfangsposition wenigstens eine Teileinheit die andere Teileinheit sensorisch erfasst, so dass die Steuereinheit anhand der Sensordaten eine Relativposition der beiden Teileinheiten erkennt und die Ankopplungsposition basierend auf der erkannten Relativposition festlegt. Die Relativposition der beiden Teileinheiten, also der Landmaschine und des Bearbeitungsgeräts, kann auch als Teileinheiten-Relativposition bezeichnet werden. Sie kann wiederum sowohl translatorische als auch rotatorische Koordinaten enthalten. Die Kenntnis der Relativposition der beiden Teileinheiten ist wesentlich für die zielführende Steuerung der Landmaschine in die korrekte Ankopplungsposition. Die Relativposition kann bevorzugt anhand von Sensordaten der o.g. Umgebungssensor-Anordnung der Landmaschine bestimmt werden. Andererseits könnten aber auch Umgebungssensoren des Anbaugeräts genutzt werden, wenn beispielsweise eine in der Landmaschine angeordnete Steuereinheit über eine drahtlose Verbindung auf diese Umgebungssensoren zugreifen kann, obwohl die beiden Teileinheiten noch nicht aneinander gekoppelt sind. Zur Bestimmung der Relativposition müssen die Sensoren der einen Teileinheit die jeweils andere Teileinheit erfassen. Die Erfassung kann dadurch vereinfacht werden, dass eine Teileinheit Markierungen aufweist, die von den Sensoren leichter erfassbar sind. Im Falle von Lidar-Sensoren könnten die Markierungen z.B. als optische Reflektoren ausgebildet sein. Im Fall von Radar-Sensoren könnten die Markierungen eine besonders hohe Reflektivität für Radarstrahlung aufweisen. Im Falle einer Kamera könnte es sich um Markierungen handeln, die sich durch Farbton und/oder Helligkeit von anderen Teilen der Teileinheit abheben. Anhand der Sensordaten kann die Steuereinheit die Relativposition bestimmen, wobei sie zusätzlich Daten über die geometrische Ausbildung der erfassten Teileinheit mit einbeziehen kann. Diese Daten können beispielsweise aus einem Speicher der Steuereinheit oder aus einem externen Datenspeicher abgerufen werden. Während des Steuerns zur Ankopplungsposition kann die Relativposition zwischenzeitlich überprüft werden, wobei eine nachträgliche Korrektur der Maschinen-Fahrroute möglich ist.

Das erfindungsgemäße Verfahren kann wie beschrieben dazu genutzt werden, das Ankoppeln eines Bearbeitungsgeräts zu erleichtern. Allerdings kann es auch bei angekoppeltem Bearbeitungsgerät von Vorteil sein. Eine Ausgestaltung sieht vor, dass das Bearbeitungsgerät als Teil des Gespanns an die Landmaschine angekoppelt ist, während das Gespann im Rangiermodus gesteuert wird. Dabei kann eine beliebige Art von Rangiervorgang durchgeführt werden, welcher sich bei rein manueller Steuerung ohne Unterstützung schwierig gestalten würde. Dies deshalb, weil sich die effektive Ausdehnung der Landmaschine durch das angekoppelte Bearbeitungsgerät deutlich vergrößert. Falls das Bearbeitungsgerät an die Landmaschine angehängt ist, z.B. über eine Anhängerkupplung, kommen weitere Freiheitsgrade hinzu, die bei der Steuerung des Gespanns zu berücksichtigen sind. Durch die sensorische Überwachung der Umgebung sowie die automatische Ermittlung von Lenk- sowie ggf. Antriebsparametern ist das Rangiermanöver allerdings auch für einen unerfahrenen Benutzer zu bewältigen. Das Manövrieren kann beispielsweise auch auf einem Betriebsgelände durchgeführt werden, wo im Gegensatz zu einem Bearbeitungsbereich eingeschränkter Platz vorhanden sein kann.

Eine Variante des Verfahrens sieht vor, dass als Endposition eine Abstellposition der Landmaschine ausgewählt wird. Die Auswahl kann durch Benutzereingabe und/oder automatisch durch die Steuereinheit erfolgen, auch eine anteilig benutzerseitige und automatische Festlegung ist möglich. Die Abstellposition ist eine Position, in welcher die Landmaschine abgestellt und vom Schlepper abgekoppelt werden kann. Eine solche Position kann insbesondere auf einem Betriebsgelände, in einer Halle oder Garage wesentlichen räumlichen Beschränkungen unterliegen. So könnten beiderseits der Abstellposition andere Fahrzeuge abgestellt sein oder es könnte eine bauliche Begrenzung wie eine Wand oder ein Zaun vorhanden sein. In jedem Fall wird das Abstellen der Landmaschine durch den Rangiermodus deutlich erleichtert.

Die Endposition kann durch die Steuereinheit basierend auf den Sensordaten festgelegt werden. D.h. die Steuereinheit wertet die Sensordaten aus, um eine Position auszuwählen, die als Endposition geeignet ist. Je nach Ausführungsform kann die Steuereinheit unterschiedliche Kriterien anwenden, um die Endposition auszuwählen. Alternativ oder zusätzlich kann die Endposition durch eine Benutzereingabe festgelegt werden. D.h. ein Benutzer tätigt eine Eingabe über eine Benutzerschnittstelle. Die Benutzereingabe kann an die Steuereinheit übermittelt werden oder sie kann z.B. gespeichert werden und die Steuereinheit kann später auf den entsprechenden Speicher zugreifen. Die Benutzereingabe könnte die Endposition exakt definieren, wobei der Benutzer z.B. anhand einer Darstellung der Umgebung eine geeignete Position aussuchen und durch Eingabe festlegen kann. Allerdings könnte der Benutzer bspw. auch nur einen ungefähren Bereich angeben, in welchem die Endposition liegen soll, wonach die Steuereinheit die genaue Endposition festlegt. Auch wäre es möglich, dass die Steuereinheit dem Benutzer mehrere Positionen (z.B. mehrere mögliche Abstellpositionen) zur Auswahl anbietet, wonach der Benutzer durch die Benutzereingabe die Endposition festlegt. Auch andere Mischformen von manueller und automatischer Festlegung sind denkbar.

Bevorzugt ermittelt die Steuereinheit basierend auf den Sensordaten eine Relativposition von Schlepper und Landmaschine und ermittelt die Lenkparameter wenigstens teilweise basierend auf der Relativposition. Die Relativposition von Schlepper und Landmaschine ist die Position, die diese relativ zueinander einnehmen. Sie kann auch als Gespann-Relativposition bezeichnet werden. Wie die Anfangs- und Endposition kann auch diese Relativposition sowohl translatorische als auch rotatorische Koordinaten aufweisen. Die Relativposition kann insbesondere darüber Auskunft geben, wie eine von einem Teil des Gespanns (also Schlepper oder Landmaschine) auf den anderen Teil wirkt. Eine derartige Kraft kann insbesondere über die o.g. Deichsel übertragen werden. Ihre Wirkung hängt auch von der Orientierung der Deichsel gegenüber dem Schlepper sowie der Landmaschine ab. Die Orientierung der Deichsel hängt unmittelbar mit der Relativposition zusammen. Daher können die Sensordaten vorteilhaft auch teilweise von wenigstens einem Deichselsensor erzeugt werden, der die Orientierung der Deichsel misst. Alternativ oder zusätzlich kann mithilfe Abstandssensoren wie Radar-, Lidar- oder Ultraschallsensoren oder optische Sensoren wie Kameras die Relativposition ermittelt werden. Die genannten Sensoren können insbesondere Teil der Landmaschine sein und können den Schlepper erfassen.

Die Aufgabe wird weiterhin gelöst durch ein landwirtschaftliches System, welches ein Gespann aufweist mit einem Schlepper, welcher einen Schlepper-Fahrantrieb und ein lenkbares Schlepper-Fahrwerk aufweist, und mit einer an den Schlepper angehängten Landmaschine, welche zur autonomen Feldbearbeitung eingerichtet ist und einen Maschinen-Fahrantrieb sowie ein lenkbares Maschinen-Fahrwerk aufweist und an welche ein Bearbeitungsgerät ankoppelbar ist, so dass die Landmaschine und das Bearbeitungsgerät Teileinheiten einer Bearbeitungseinheit bilden, wobei das System eine Steuereinheit aufweist.

Erfindungsgemäß ist das Gespann in einem Rangiermodus steuerbar, in welchem die Steuereinheit eingerichtet ist
- Sensordaten zu empfangen, die wenigstens anteilig von einer der Teileinheiten erzeugt werden;
- basierend auf den Sensordaten sowie einer Fahrtrichtungsvorgabe für die Landmaschine, Lenkparameter zum Lenken der Landmaschine sowie des Schleppers zu ermitteln; und
- wenigstens die Landmaschine automatisch entsprechend den Lenkparametern zu lenken.

Die genannten Begriffe wurden bereits oben mit Bezug auf das erfindungsgemäße Verfahren erläutert und werden daher nicht nochmals erklärt. Das landwirtschaftliche System weist wenigstens das Gespann auf und kann in einigen Ausführungsformen mit diesem identisch sein. Die Steuereinheit kann Teil des Gespanns sein, insbesondere Teil der Landmaschine. Vorteilhafte Ausgestaltungen des erfindungsgemäßen Systems entsprechen denen des erfindungsgemäßen Verfahrens.

Die Aufgabe wird auch gelöst durch eine Steuereinheit für ein landwirtschaftliches System, welches ein Gespann aufweist mit einem Schlepper, welcher einen Schlepper-Fahrantrieb und ein lenkbares Schlepper-Fahrwerk aufweist, und mit einer an den Schlepper angehängten Landmaschine, welche zur autonomen Feldbearbeitung eingerichtet ist und einen Maschinen-Fahrantrieb sowie ein lenkbares Maschinen-Fahrwerk aufweist und an welche ein Bearbeitungsgerät ankoppelbar ist, so dass die Landmaschine und das Bearbeitungsgerät Teileinheiten einer Bearbeitungseinheit bilden.

Erfindungsgemäß ist die Steuereinheit eingerichtet, in einem Rangiermodus des Gespanns
- Sensordaten zu empfangen, die wenigstens anteilig von einer der Teileinheiten erzeugt werden;
- basierend auf den Sensordaten sowie einer Fahrtrichtungsvorgabe für die Landmaschine, Lenkparameter zum Lenken der Landmaschine sowie des Schleppers zu ermitteln; und
- wenigstens die Landmaschine automatisch entsprechend den Lenkparametern zu lenken.

Die genannten Begriffe wurden bereits oben mit Bezug auf das erfindungsgemäße Verfahren sowie das erfindungsgemäße landwirtschaftliche System erläutert und werden daher nicht nochmals erklärt. Vorteilhafte Ausgestaltungen der erfindungsgemäßen Steuereinheit entsprechen denen des erfindungsgemäßen Verfahrens.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht eines erfindungsgemäßen landwirtschaftlichen Systems mit einem Gespann sowie einem Bearbeitungsgerät;
- Fig. 2: ein Blockdiagramm mit Komponenten des landwirtschaftlichen Systems;
- Fig. 3A: eine Draufsicht des Gespanns, des Bearbeitungsgeräts sowie eines Baums;
- Fig. 3B: eine Fig. 3A entsprechende Draufsicht, in welcher Fahrrouten eingezeichnet sind;
- Fig. 4A: eine Draufsicht des Gespanns mit angekoppeltem Bearbeitungsgerät sowie verschiedener Hindernisse;
- Fig. 4B: eine Fig. 4A entsprechende Draufsicht, in welcher Fahrrouten eingezeichnet sind;
- Fig. 5: ein Flussdiagramm einer ersten Ausführungsform eines erfindungsgemäßen Verfahrens;
- Fig. 6: ein Flussdiagramm einer zweiten Ausführungsform eines erfindungsgemäßen Verfahrens; sowie
- Fig.7: eine Darstellung einer Benutzerschnittstelle des landwirtschaftlichen Systems.

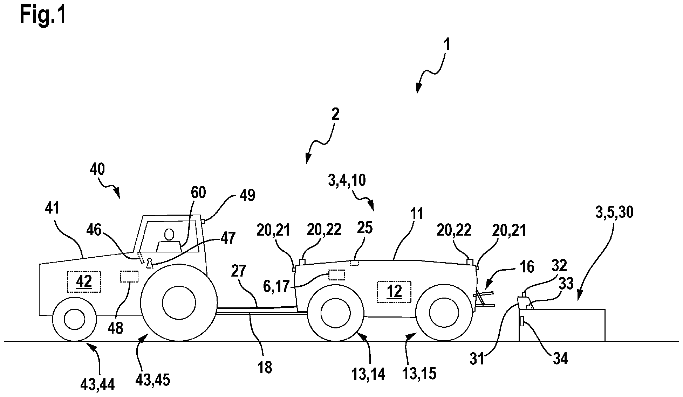

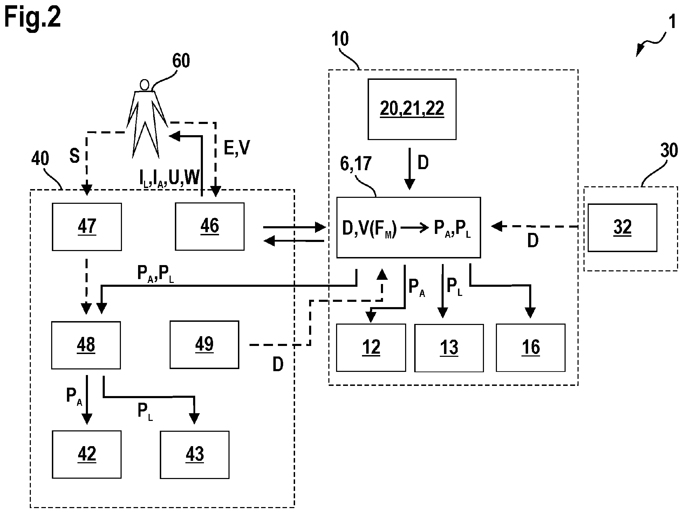

Fig. 1 zeigt eine schematische Seitenansicht eines landwirtschaftlichen Systems 1. Das System 1 weist ein Gespann 2 auf, mit einem Schlepper 40 sowie einer an diesen angehängten Landmaschine 10. Die Landmaschine 10 ist als autonomes Fahrzeug ausgebildet. Sie weist einen Fahrzeugkörper 11 auf, an dem zwei lenkbare Achsen 14, 15 eines Maschinen-Fahrwerks 13 angeordnet sind. Im Rahmen einer autonomen Feldbearbeitung sind sowohl die Lenkung des Maschinen-Fahrwerks 13 als auch ein mit diesem antriebsübertragend gekoppelter Maschinen-Fahrantrieb 12 durch eine Maschinen-Steuerung 17 steuerbar, welche eine Steuereinheit 6 des Systems 1 bildet. Die Maschinen-Steuerung 17 kann Antriebsparameter P_{A} an den Maschinen-Antrieb 12 sowie Lenkparameter P_{L} an das Maschinen-Fahrwerk 13 übermitteln, wie aus dem Blockdiagramm in Fig.2 hervorgeht. Die Landmaschine 10 kann entsprechend der Steuerung durch die Maschinen-Steuerung 17 autonom entlang einer Fahrroute fahren, während sie mittels eines Bearbeitungsgeräts 30 die Feldbearbeitung durchführt. Hierzu weist die Landmaschine 10 ein am Fahrzeugkörper 11 angeordnetes Hubwerk 16 auf, welches ebenfalls von der Steuereinheit 6 angesteuert werden kann. In diesem Beispiel ist das Hubwerk 16 heckseitig angeordnet, es könnte aber auch frontseitig angeordnet sein. Fig.1 zeigt das Bearbeitungsgerät 30 in einem von der Landmaschine 10 entkoppelten Zustand. Das Bearbeitungsgerät 30 ist hier als Anbaugerät ausgebildet. Alternativ könnte es aber beispielsweise auch ein eigenes Fahrwerk aufweisen und über eine Anhängerkupplung an die Landmaschine 10 anhängbar sein. Die Landmaschine 10 bildet eine erste Teileinheit 4 einer landwirtschaftlichen Bearbeitungseinheit 3, während das Bearbeitungsgerät 30 eine zweite Teileinheit 5 bildet.

Die Landmaschine 10 weist eine Umgebungssensor-Anordnung 20 auf, die auch bei der Feldbearbeitung eingesetzt werden kann, insbesondere um eine Orientierung zu ermöglichen und mögliche Risiken zu erkennen. Hierzu zählen hier als Kameras 21 ausgebildete optische Sensoren sowie Abstandssensoren 22, die z.B. als Radar-, Lidar- und/oder Ultraschallsensoren ausgebildet sein können. Die Sensoren 21, 22 können Sensordaten D an die Steuereinheit 6 übertragen. Die Landmaschine 10 weist außerdem eine drahtlose Schnittstelle 25 auf, über die die Steuereinheit 6 mit externen Einheiten kommunizieren kann sowie optional auch mit dem Bearbeitungsgerät 30.

Das Bearbeitungsgerät 30 kann bspw. als Mähwerk ausgebildet sein. Es ist zur Ankopplung an das Hubwerk 16 eingerichtet, wobei die Ankopplung an einen Kopplungsbereich 31 des Bearbeitungsgeräts 30 erfolgt. Das Bearbeitungsgerät 30 weist einen als Kamera 32 ausgebildeten Sensor auf. Des Weiteren ist eine drahtlose Schnittstelle 33 vorgesehen, über welche die Landmaschine 10 eine Verbindung zum Bearbeitungsgerät 30 herstellen kann, auch wenn die beiden Teileinheiten 4, 5 nicht physisch verbunden sind. Somit kann die Steuereinheit 6 optional auch Sensordaten D von der Kamera 32 empfangen, wie in Fig. 2 durch die gestrichelte Verbindung angedeutet ist. Das Bearbeitungsgerät 30 kann des Weiteren wenigstens eine Markierung 34 aufweisen, die von den Sensoren 21, 22 der Landmaschine 10 besonders gut erfasst werden kann. Es kann sich um eine optische Markierung handeln, die sich farblich oder helligkeitsmäßig von benachbarten Bereichen des Bearbeitungsgeräts 30 abhebt. Es könnte aber auch einen Reflektor für sichtbares Licht oder Radiowellen sein, der von einem Lidar- oder Radar-Sensor optimal erfasst wird.

Der Schlepper 40 weist einen Fahrzeugkörper 41 auf, an dem zwei Achsen 44, 45 eines Schlepper-Fahrwerks 43 angeordnet sind. In diesem Beispiel ist eine Vorderachse 44 lenkbar, während eine Hinterachse 45 nicht-lenkbar ausgebildet ist. Sowohl die Lenkung des Schlepper-Fahrwerks 43 als auch ein mit diesem antriebsübertragend gekoppelter Schlepper-Fahrantrieb 42 sind durch eine Schlepper-Steuerung 48 steuerbar, welche Antriebsparameter P_{A} an den Schlepper-Antrieb 42 sowie Lenkparameter P_{L} an das Schlepper-Fahrwerk 43 übermittelt. Im Normalbetrieb des Schleppers 40 empfängt die Schlepper-Steuerung 48 ihrerseits Signale von wenigstens einem Bedienelement 47, das in einer Fahrerkabine des Schleppers 40 angeordnet ist. Als Bedienelement 47 können z.B. ein Steuerhebel, ein Pedal und/oder ein Lenkrad dienen. Das wenigstens eine Bedienelement 47 kann durch Steueraktionen S eines Benutzers 60 oder Fahrers des Schleppers 40 bedient werden. Weiterhin ist in der Fahrerkabine wenigstens eine Benutzerschnittstelle 46 angeordnet, die beispielsweise als Touchscreen ausgebildet sein kann und somit sowohl für Benutzerausgaben als auch für Benutzereingaben nutzbar ist.

Der Schlepper 40 ist über eine Deichsel 18 mit der Landmaschine 10 verbunden. Die Deichsel 18 kann dauerhaft mit der Landmaschine 10 verbunden sein, sie könnte aber auch von der Landmaschine 10 abnehmbar sein. Im Fall einer dauerhaften Verbindung kann die Deichsel 18 vorteilhaft in eine platzsparende Position verstellt werden, wenn die Landmaschine 10 eine autonome Feldbearbeitung durchführen soll. Die Vorderachse 14 der Landmaschine 10 kann durch die Deichsel 18 zwangsgelenkt sein, sie kann aber auch von dieser entkoppelt sein. In jedem Fall ist die Deichsel 18 in sich starr ausgebildet und gegenüber beiden Fahrzeugkörper an 11, 41 schwenkbar. Sie kann somit sowohl Zug- als auch Druckkräfte zwischen dem Schlepper 40 und der Landmaschine 10 übertragen, während sie ansonsten verschiedene Relativpositionen der beiden Fahrzeuge 10, 40 erlaubt. Die Landmaschine 10 ist außerdem über eine drahtgebunden Datenverbindung 27, welche bspw. dem ISOBUS-Standard entsprechen kann, mit dem Schlepper 40 verbunden. Hierdurch ist auch eine signalübertragende Verbindung zwischen der Maschinen-Steuerung 17 als Steuereinheit 6 und der Schlepper-Steuerung 48 gegeben. Die Verbindung ermöglicht es der Steuereinheit 6 über ein System wie TIM auf die Schlepper-Steuerung 48 zuzugreifen. Hierdurch kann die Steuereinheit 6 auch den Schlepper-Fahrantrieb 42 und das Schlepper-Fahrwerk 43 steuern. Der Schlepper 40 weist auch eine Kamera 49 auf, die nach hinten in Richtung der Landmaschine 10 gerichtet ist. Auch diese Kamera 49 kann optional Sensordaten D zur Steuereinheit 6 übertragen.

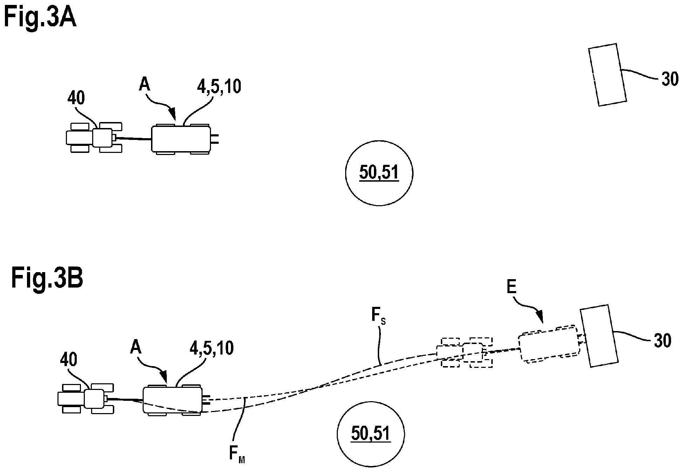

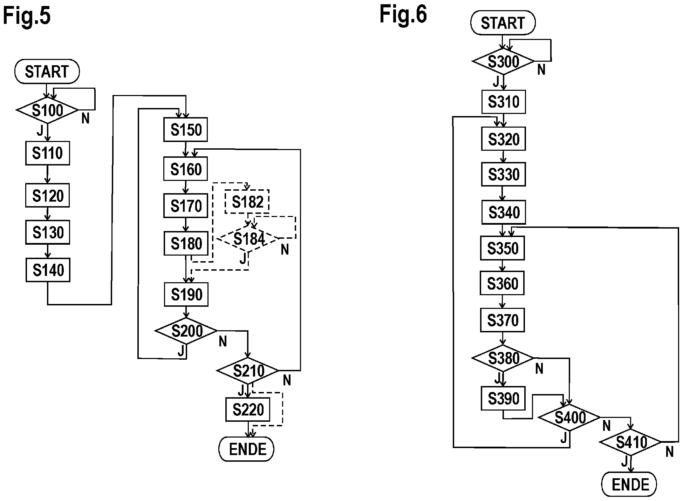

Die Steuereinheit 6 ist dazu eingerichtet, wenigstens einige Schritte eines erfindungsgemäßen Verfahrens durchzuführen, das nachfolgend mit Bezug auf die Figuren 3A-4B sowie insbesondere das Flussdiagramm in Fig. 5 erläutert wird. Das Verfahren ist für Situationen geeignet, in welchen das Gespann 2 schwierig zu steuern ist, allerdings die Landmaschine 10 nicht abgekoppelt werden soll. Eine derartige Situation ist in Fig. 3A dargestellt. Das Gespann 2 befindet sich in einiger Entfernung von dem Bearbeitungsgerät 30, welches an die Landmaschine 10 angekoppelt werden soll. Dies erfordert, dass die Landmaschine 10 aus einer Anfangsposition A in eine Endposition E manövriert wird, die einer Ankopplungsposition entspricht. Der Benutzer 60 kann das Gespann 2 manuell in die in Fig. 3A dargestellte Position manövrieren. Die Anfangsposition A ist so beschaffen, dass zumindest die Landmaschine 10 das Bearbeitungsgerät 30 mittels der Sensoren 21, 22 erfassen kann. Zusätzlich kann auch wie oben geschildert eine drahtlose Verbindung zum Bearbeitungsgerät 30 hergestellt werden, so dass ein Zugriff auf die Kamera 32 möglich ist, welche ihrerseits die Landmaschine 10 erfassen kann.

In einem ersten Schritt S100 des Verfahrens wird überprüft, ob der Benutzer 60 eine Benutzereingabe getätigt hat, wonach er ein wenigstens teilweise automatisches Rangieren wünscht. Ist dies der Fall, wird in Schritt S110 das Gespann 2 in einem Rangiermodus versetzt. Hierzu kann die Steuereinheit 6 über TIM die Kontrolle über die Schlepper-Steuerung 48 übernehmen. Außerdem wird einer der Fahrantriebe 12, 42 als aktiver Fahrantrieb ausgewählt, bspw. der Maschinen-Fahrantrieb 12. Der andere Fahrantrieb, in diesem Beispiel also der Schlepper-Fahrantrieb 42, wird abgeschaltet und vom Schlepper-Fahrwerk 43 entkoppelt. Somit ist die Landmaschine 10 in der Lage, den Schlepper 40 mittels der Deichsel 18 zu ziehen oder zu schieben.

In einem Schritt S120 empfängt die Steuereinheit 6 Sensordaten D, die von den Sensoren 21, 22 der Landmaschine 10, aber auch von wenigstens einer der Kameras 32, 49 stammen können. Im nächsten Schritt S130 ermittelt die Steuereinheit 6 basierend auf den Sensordaten D zum einen eine Relativposition der Landmaschine 10 und des Schleppers 40 sowie zum anderen eine Relativposition der Landmaschine 10 und des Bearbeitungsgeräts 30. Letzteres kann dadurch unterstützt werden, dass die Landmaschine 10 die wenigstens eine Markierung 34 sensorisch erfasst. Anhand der festgestellten Relativposition des Bearbeitungsgeräts 30 kann die Steuereinheit 6 in einem nächsten Schritt S140 die Endposition E festlegen, also die Ankopplungsposition.

Nachdem die Endposition E festgelegt wurde, bestimmt die Steuereinheit 6 in Schritt S150 eine Maschinen-Fahrroute F_{M} zur Endposition E sowie eine Schlepper-Fahrroute Fs, die mit der mit der Maschinen-Fahrroute F_{M} vereinbar ist. Dabei berücksichtigt die Steuereinheit 6, dass der Schlepper 40 über die Deichsel 18 an die Landmaschine 10 gekoppelt ist und sich somit nicht unabhängig von dieser bewegen kann. Beide Fahrrouten F_{M}, Fs sind in Fig. 3B eingezeichnet. Außerdem sind in gestrichelter Linie die Endposition E der Landmaschine 10 sowie die zugehörige Position des Schleppers 40 eingezeichnet. Aus der Maschinen-Fahrroute F_{M} ergibt sich eine Fahrtrichtungsvorgabe V für die Landmaschine 10. Die Fahrtrichtungsvorgabe V entspricht der vorgesehenen Fahrtrichtung an einem jeweiligen Punkt der Maschinen-Fahrroute F_{M} und ist somit für unterschiedliche Teile der Maschinen-Fahrroute F_{M} unterschiedlich. In einem weiteren Schritt S160 empfängt die Steuereinheit 6 erneut Sensordaten D. Diese geben insbesondere Aufschluss über die aktuelle Anordnung der Landmaschine 10 sowie die Relativposition des Schleppers 40 gegenüber der Landmaschine 10.

Durch Abgleich mit der Fahrtrichtungsvorgabe V kann die Steuereinheit 6 in einem Schritt S170 Lenkparameter P_{L} sowie Antriebsparameter P_{A} für die Landmaschine 10 sowie für den Schlepper 40 ermitteln. Da in diesem Beispiel der Schlepper-Fahrantrieb 42 abgeschaltet ist, betreffen die Antriebsparameter P_{A} nur die Landmaschine 10. In einem nächsten Schritt S180 steuert die Steuereinheit 6 den Maschinen-Fahrantrieb 12 sowie das Maschinen-Fahrwerk 13 entsprechend der ermittelten Parameter P_{A}, P_{L}. Außerdem steuert sie mittels der Schlepper-Steuerung 48 das Schlepper-Fahrwerk 43. Gemäß einer alternativen Ausgestaltung, die im Blockdiagramm von Fig. 2 angedeutet ist, steuert die Steuereinheit 6 die Systeme des Schleppers 40 nicht direkt an, sondern gibt in einem Schritt S182 über die Benutzerschnittstelle 46 Lenkanweisungen I_{L} aus, anhand derer der Benutzer 60 den Schlepper 40 steuern muss. In einem Schritt S184 kann überprüft werden, ob der Benutzer 60 die Lenkanweisungen I_{L} ausgeführt hat. In Schritt S190 werden dem Benutzer 60 über die Benutzerschnittstelle 46 Umgebungsinformationen U angezeigt, z.B. ein oder mehrere Kamerabilder oder eine graphische Darstellung 56 des Gespanns 2 sowie ggf. des Bearbeitungsgeräts 30.

In einem nachfolgenden Schritt S200 überprüft die Steuereinheit 6 anhand der Sensordaten D, ob ein Hindernis 50 erkannt wurde, mit welchem das Gespann 2 möglicherweise kollidieren könnte. Im Beispiel von Fig. 3A und 3B ist schematisch ein Baum 51 als Hindernis 50 eingezeichnet. Wird eine Kollisionsgefahr erkannt, kehrt das Verfahren zu Schritt S 150 zurück, wo die Fahrrouten F_{M}, Fs im Hinblick auf das Hindernis 50 angepasst werden, was wiederum zu einer Anpassung der Fahrtrichtungsvorgabe V sowie der Lenkparameter P_{L} führt.

In einem weiteren Schritt S210 wird überprüft, ob bereits die Endposition E erreicht wurde. Ist dies nicht der Fall, kehrt das Verfahren zu Schritt S160 zurück. Wurde bereits die Endposition E erreicht, führt die Steuereinheit 6 in einem Schritt S220 automatisch eine Ankopplung des Bearbeitungsgeräts 30 durch. Danach endet das Verfahren.

Im soeben beschriebenen Beispiel wird das Gespann 2 durch den Maschinen-Fahrantrieb 12 angetrieben. Alternativ könnte es auch durch den Schlepper-Fahrantrieb 42 als aktiven Fahrantrieb angetrieben werden. In diesem Fall würde der Maschinen-Fahrantrieb 12 abgeschaltet und vom Maschinen-Fahrwerk 13 entkoppelt. Die Steuereinheit 6 könnte die Antriebsparameter P_{A} an den Schlepper-Fahrantrieb 42 übermitteln und diesen somit direkt ansteuern. Alternativ könnte die Steuereinheit 6 über die Benutzerschnittstelle 46 Antriebsanweisungen I_{A} für den Benutzer 60 ausgeben, wonach der Benutzer 60 durch Steueraktionen S den Schlepper-Fahrantrieb 42 entsprechend bedient. Eine Abwandlung des Verfahrens könnte die Steuereinheit 6 nicht durch die Maschinen-Steuerung 17 gebildet sein, sondern bspw. durch die Schlepper-Steuerung 48 oder durch eine externe Steuereinheit.

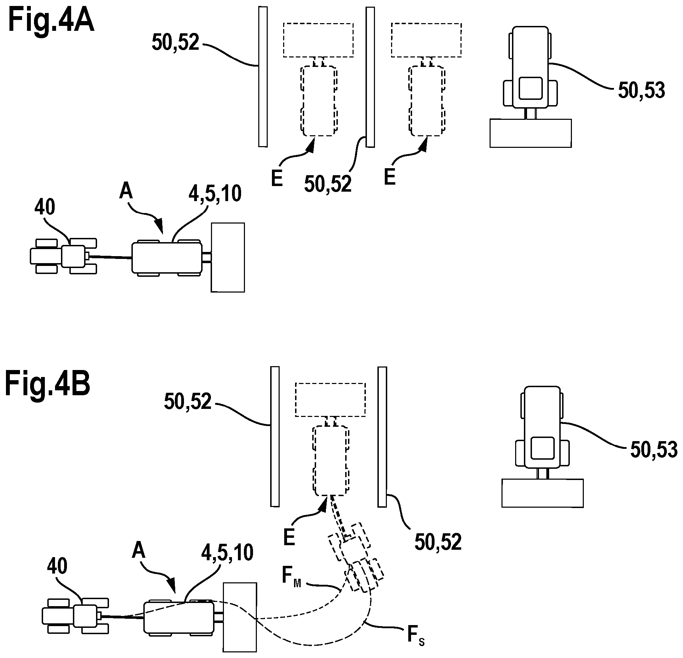

Fig. 4A und 4B zeigen eine andere Situation, in welcher die Landmaschine 10 auf einem Betriebsgelände abgestellt werden soll. Dabei ist das Bearbeitungsgerät 30 an die Landmaschine 10 angekoppelt, was die Handhabung des Gespanns 2 nochmals komplizierter macht. Auch in diesem Fall wird die Landmaschine 10 von einer Anfangsposition A zu einer Endposition E gesteuert, die einer Aufstellposition entspricht. Hierbei kann das in Fig. 5 dargestellte Verfahren in leicht abgewandelter Form durchgeführt werden. Im Schritt S100 wird abgefragt, ob der Benutzer 60 ein Abstellen der Landmaschine 10 wünscht. Nachdem im Schritt S120 die Sensordaten D empfangen und in Schritt S130 die Relativposition des Schleppers 40 gegenüber der Landmaschine 10 festgestellt wurde, erfolgt in Schritt S140 wiederum das Festlegen der Endposition E. In diesem Fall kann die Steuereinheit 6 zwei mögliche Endpositionen E ermitteln, von denen eine zwischen zwei Wänden 52 angeordnet ist und die andere zwischen einer Wand 52 und einem abgestellten Fahrzeug 53. Die Festlegung der Endposition E kann anhand einer Benutzereingabe erfolgen. In diesem Beispiel wählt der Benutzer 60 die zwischen den Wänden 52 angeordnete Endposition E. Danach kann das Verfahren wie bereits beschrieben durchgeführt werden, mit dem Unterschied das nach Erreichen der Endposition der Schritt S220 übersprungen wird.

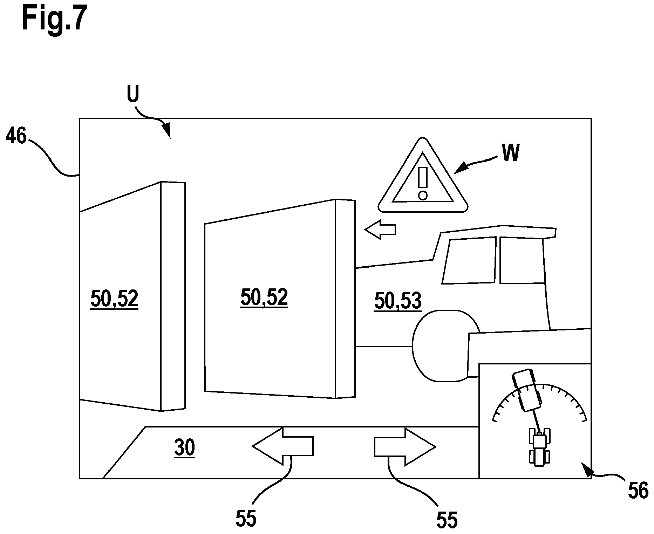

In den bisherigen Beispielen wurde die Fahrtrichtungsvorgabe V von der Steuereinheit 6 bestimmt. Fig. 6 zeigt eine Ausführungsform eines erfindungsgemäßen Verfahrens, bei der der Benutzer 60 die entsprechende Fahrtrichtungsvorgabe V festlegt. In einem Schritt S300 wird geprüft, ob der Benutzer 60 eine Unterstützung beim Rangieren des Gespanns 2 wünscht. Ist dies der Fall, erfolgt in Schritt S310 der Übergang in den Rangiermodus. Dieser unterscheidet sich nicht von dem mit Bezug auf Fig. 5 beschriebenen Verfahren. In Schritt S320 wird eine Ausgabe auf der Benutzerschnittstelle 46 ausgelöst, die neben den bereits oben erwähnten Umgebungsinformationen U auch Eingabefelder wie z.B. Pfeilsymbole 55 enthält. Eines solche Anzeige, die der Situation in Fig.4A, 4B entspricht, ist in Fig.7 dargestellt. In Schritt S330 wird eine Benutzereingabe ausgewertet, anhand derer im nachfolgenden Schritt S340 die Fahrtrichtungsvorgabe V festgelegt wird. Die Benutzereingabe kann erfolgen, indem der Benutzer 60 die Pfeilsymbole 55 berührt, wodurch er die gewünschte Ausrichtung der Landmaschine 10 relativ zum Schlepper 40 beeinflussen kann. Die entsprechende gewünschte Ausrichtung, die einem bestimmten Knickwinkel der Deichsel 18 entspricht, kann ebenfalls auf der Benutzerschnittstelle 46 als graphische Darstellung 56 angezeigt werden.

In einem Schritt S350 empfängt die Steuereinheit 6 Sensordaten D. Basierend auf diesen sowie der Fahrtrichtungsvorgabe V ermittelt sie in Schritt S360 die Antriebsparameter P_{A} sowie die Lenkparameter P_{L}. In Schritt S370 wird das Gespann entsprechend der ermittelten Parameter P_{A}, P_{L} gesteuert, wobei wiederum die mit Bezug auf Fig.5 geschilderten unterschiedlichen Varianten denkbar sind. In Schritt S380 wird überprüft, ob ein Hindernis 50 erkannt wird. Ist dies der Fall, wird in Schritt S390 eine Kollisionswarnung W ausgegeben. In Fig.7 ist diese als Warndreieck mit einem Richtungspfeil in Richtung des erkannten Hindernisses 50 dargestellt, wobei selbstverständlich auch andere Möglichkeiten bestehen. Zusätzlich oder alternativ kann die Kollisionswarnung W z.B. akustisch erfolgen. In Schritt S400 wird geprüft, ob eine neue Benutzereingabe vorliegt, die sich auf die Fahrtrichtungsvorgabe V auswirkt. Ist dies der Fall, kehrt das Verfahren zu Schritt S320 zurück. Andernfalls wird in Schritt S410 geprüft, ob der Benutzer 60 den Rangiermodus beenden möchte. Falls nein, kehrt das Verfahren zu Schritt S350 zurück. Andernfalls endet das Verfahren.

In jedem der Verfahren gemäß Fig.5 sowie Fig.6 kann die Reihenfolge von Verfahrensschritten geändert werden oder es können Verfahrensschritte gleichzeitig erfolgen, soweit dies technisch sinnvoll ist. Auch können Verfahrensschritte hinzugefügt werden. Insbesondere betrifft dies die Ausgabe der Umgebungsinformationen U, die zwischenzeitlich aktualisiert werden kann. Aus Gründen der Übersichtlichkeit zeigen die Flussdiagramme jeweils nur eine derartige Ausgabe.

## Patentansprüche

1. Verfahren zum Steuern eines Gespanns (2) mit einem Schlepper (40), welcher einen Schlepper-Fahrantrieb (42) und ein lenkbares Schlepper-Fahrwerk (43) aufweist, und mit einer an den Schlepper (40) angehängten Landmaschine (10), welche zur autonomen Feldbearbeitung eingerichtet ist und einen Maschinen-Fahrantrieb (12) sowie ein lenkbares Maschinen-Fahrwerk (13) aufweist und an welche ein Bearbeitungsgerät (30) ankoppelbar ist, so dass die Landmaschine (10) und das Bearbeitungsgerät (30) Teileinheiten (4, 5) einer Bearbeitungseinheit (3) bilden,
**dadurch gekennzeichnet, dass**
das Gespann (2) in einem Rangiermodus gesteuert wird, indem eine Steuereinheit (6)
- Sensordaten (D) empfängt (S160, S350), die wenigstens anteilig von einer der Teileinheiten (4, 5) erzeugt werden;
- basierend auf den Sensordaten (D) sowie einer Fahrtrichtungsvorgabe (V) für die Landmaschine (10), Lenkparameter (P_{L}) zum Lenken der Landmaschine (10) sowie des Schleppers (40) ermittelt (S170, S360); und
- wenigstens die Landmaschine (10) automatisch entsprechend den Lenkparametern (P_{L}) lenkt (S180, S370).

2. Verfahren nach Anspruch 1, **dadurch gekennzeichnet, dass** die Landmaschine (10) im Rangiermodus von einer Anfangsposition (A) zu einer Endposition (E) gesteuert wird, wobei die Steuereinheit (6) eine zur Endposition (E) führende Maschinen-Fahrroute (F_{M}) ermittelt (S150) und die Fahrtrichtungsvorgabe (V) dementsprechend definiert, wobei die Steuereinheit (6) bevorzugt eine mit der Maschinen-Fahrroute (F_{M}) vereinbare Schlepper-Fahrroute (F_{S}) ermittelt.

3. Verfahren nach einem der vorangehenden Ansprüche, **dadurch gekennzeichnet, dass** die Steuereinheit (6) in der Landmaschine (10) angeordnet ist und/oder die Sensordaten (D) wenigstens anteilig von einer Umgebungssensor-Anordnung (20) der Landmaschine (10) erzeugt werden, welche eine Umgebung der Landmaschine (10) erfasst.

4. Verfahren nach einem der vorangehenden Ansprüche, **dadurch gekennzeichnet, dass** der Schlepper (40) automatisch entsprechend den Lenkparametern (P_{L}) gelenkt wird (S180, S370) oder dass den Lenkparametern (P_{L}) entsprechende Lenkanweisungen (I_{L}) über eine Benutzerschnittstelle (46) ausgegeben werden (S182) und ein Benutzer (60) den Schlepper (40) entsprechend den Lenkanweisungen (I_{L}) manuell lenkt (S184).

5. Verfahren nach einem der vorangehenden Ansprüche, **dadurch gekennzeichnet, dass** das Gespann (2) im Rangiermodus durch den Maschinen-Fahrantrieb (12) oder durch den Schlepper-Fahrantrieb (42) als aktiven Fahrantrieb angetrieben wird, wobei bevorzugt der jeweils andere Fahrantrieb (12, 42) für den Rangiermodus abgeschaltet wird.

6. Verfahren nach einem der vorangehenden Ansprüche, **dadurch gekennzeichnet, dass** die Steuereinheit (6) Antriebsparameter (P_{A}) für wenigstens einen Fahrantrieb (12, 42) ermittelt, wobei die Steuereinheit (6) den aktiven Fahrantrieb entsprechend den Antriebsparametern (P_{A}) steuert oder den Antriebsparametern (P_{A}) entsprechende Antriebsanweisungen (I_{A}) über eine Benutzerschnittstelle (46) ausgegeben werden und ein Benutzer (60) den aktiven Fahrantrieb entsprechend den Antriebsanweisungen (I_{A}) manuell steuert.

7. Verfahren nach einem der vorangehenden Ansprüche, **dadurch gekennzeichnet, dass** über eine Benutzerschnittstelle (46) Umgebungsinformationen (U) für einen Benutzer (60) ausgegeben werden (S190, S320), die auf den Sensordaten (D) basieren.

8. Verfahren nach einem der vorangehenden Ansprüche, **dadurch gekennzeichnet, dass** die Fahrtrichtungsvorgabe (V) durch eine Benutzereingabe (S330) festgelegt wird, welche bevorzugt über eine Benutzerschnittstelle (46) des Schleppers 40 erfolgt.

9. Verfahren nach einem der vorangehenden Ansprüche, **dadurch gekennzeichnet, dass** die Steuereinheit (6) basierend auf den Sensordaten (D) ein Hindernis (50) erkennt (S200, S380) und die Lenkparameter (P_{L}) anpasst, um eine Kollision zwischen dem Hindernis (50) und dem Gespann (2) zu vermeiden, und/oder eine Kollisionswarnung (W) für einen Benutzer (60) auslöst (S390).

10. Verfahren nach einem der vorangehenden Ansprüche, **dadurch gekennzeichnet, dass** die Steuereinheit (6) die Endposition (E) als Ankopplungsposition festlegt, in welcher das Bearbeitungsgerät (30) an die Landmaschine (10) ankoppelbar ist, und bevorzugt nach Erreichen der Endposition (E) ein Ankoppeln des Bearbeitungsgeräts (30) an die Landmaschine (10) steuert (S220).

11. Verfahren nach einem der vorangehenden Ansprüche, **dadurch gekennzeichnet, dass** in der Anfangsposition (A) wenigstens eine Teileinheit (4, 5) die andere Teileinheit (4, 5) sensorisch erfasst, so dass die Steuereinheit (6) anhand der Sensordaten (D) eine Relativposition der beiden Teileinheiten (4, 5) erkennt und die Ankopplungsposition basierend auf der erkannten Relativposition festlegt.

12. Verfahren nach einem der vorangehenden Ansprüche, **dadurch gekennzeichnet, dass** das Bearbeitungsgerät (30) als Teil des Gespanns (2) an die Landmaschine (10) angekoppelt ist, während das Gespann (2) im Rangiermodus gesteuert wird.

13. Verfahren nach einem der vorangehenden Ansprüche, **dadurch gekennzeichnet, dass** als Endposition (E) eine Abstellposition der Landmaschine (10) ausgewählt wird.

14. Verfahren nach einem der vorangehenden Ansprüche, **dadurch gekennzeichnet, dass** die Endposition (E) durch die Steuereinheit (6) basierend auf den Sensordaten (D) und/oder durch eine Benutzereingabe festgelegt wird (S140).

15. Verfahren nach einem der vorangehenden Ansprüche, **dadurch gekennzeichnet, dass** die Steuereinheit (6) basierend auf den Sensordaten (D) eine Relativposition von Schlepper (40) und Landmaschine (10) ermittelt (S130) und die Lenkparameter (P_{L}) wenigstens teilweise basierend auf der Relativposition ermittelt.

16. Landwirtschaftliches System (1) aufweisend ein Gespann (2) mit einem Schlepper (40), welcher einen Schlepper-Fahrantrieb (42) und ein lenkbares Schlepper-Fahrwerk (43) aufweist, und mit einer an den Schlepper (40) angehängten Landmaschine (10), welche zur autonomen Feldbearbeitung eingerichtet ist und einen Maschinen-Fahrantrieb (12) sowie ein lenkbares Maschinen-Fahrwerk (13) aufweist und an welche ein Bearbeitungsgerät (30) ankoppelbar ist, so dass die Landmaschine (10) und das Bearbeitungsgerät (30) Teileinheiten (4, 5) einer Bearbeitungseinheit (3) bilden, wobei das System (1) eine Steuereinheit (6) aufweist,
**dadurch gekennzeichnet, dass**
das Gespann (2) in einem Rangiermodus steuerbar ist, in welchem die Steuereinheit (6) eingerichtet ist
- Sensordaten (D) zu empfangen (S160, S350), die wenigstens anteilig von einer der Teileinheiten (4, 5) erzeugt werden;
- basierend auf den Sensordaten (D) sowie einer Fahrtrichtungsvorgabe (V) für die Landmaschine (10), Lenkparameter (P_{L}) zum Lenken der Landmaschine (10) sowie des Schleppers (40) zu ermitteln (S170, S360); und
- wenigstens die Landmaschine (10) automatisch entsprechend den Lenkparametern (P_{L}) zu lenken (S180, S370).

17. Steuereinheit (6) für ein landwirtschaftliches System (1), welches ein Gespann (2) aufweist mit einem Schlepper (40), welcher einen Schlepper-Fahrantrieb (42) und ein lenkbares Schlepper-Fahrwerk (43) aufweist, und mit einer an den Schlepper (40) angehängten Landmaschine (10), welche zur autonomen Feldbearbeitung eingerichtet ist und einen Maschinen-Fahrantrieb (12) sowie ein lenkbares Maschinen-Fahrwerk (13) aufweist und an welche ein Bearbeitungsgerät (30) ankoppelbar ist, so dass die Landmaschine (10) und das Bearbeitungsgerät (30) Teileinheiten (4, 5) einer Bearbeitungseinheit (3) bilden,
**dadurch gekennzeichnet, dass**
die Steuereinheit (6) eingerichtet ist, in einem Rangiermodus des Gespanns (2)
- Sensordaten (D) zu empfangen (S160, S350), die wenigstens anteilig von einer der Teileinheiten (4, 5) erzeugt werden;
- basierend auf den Sensordaten (D) sowie einer Fahrtrichtungsvorgabe (V) für die Landmaschine (10), Lenkparameter (P_{L}) zum Lenken der Landmaschine (10) sowie des Schleppers (40) zu ermitteln (S170, S360); und
- wenigstens die Landmaschine (10) automatisch entsprechend den Lenkparametern (P_{L}) zu lenken (S180, S370).
